# EUROPÄISCHE PATENTANMELDUNG

(11) **EP 4 410 711 A1**
(43) Veröffentlichungstag der Anmeldung: **07.08.2024**
(21) Anmeldenummer: 23210291.3
(22) Anmeldetag: 16.11.2023
(51) Int. Cl.: B65G 1/00, B65G 19/02, B65G 21/20, B65G 21/22, B65G 19/20

(54) **TRANSPORTEINRICHTUNG ZUM TRANSPORTIEREN VON STÜCKGÜTERN**

(30) Priorität: 21.11.2022 DE 102022130645
(71) Anmelder: Ludwig Bohrer Maschinenbau GmbH, 93128 Regenstauf (DE)
(72) Erfinder: BOHRER, Georg, 93128 Regenstauf (DE)
(74) Vertreter: Bittner, Bernhard

(57) **Zusammenfassung**

Transporteinrichtung (1) zum Transportieren von Stückgütern (10), insbesondere Gebinden oder Getränkekästen mit einem Grundträger (2), an dem eine umlaufende Transportkette (12) angeordnet ist, wobei an der Transportkette (12) eine Vielzahl von Kontakteinrichtungen zum Kontaktieren und Transportieren der Stückgüter (10) angeordnet ist und mit einer Führungseinrichtung (4) zum Führen der Transportkette (10)), wobei die Führungseinrichtung einen Träger (22) aufweist, welcher an dem Grundträger (2) befestigbar ist sowie eine erste Führungsschiene (24) und eine zweite Führungsschiene (26) wobei zwischen der ersten Führungsschiene (24) und der zweiten (26) eine Führungsausnehmung (28) zum Führen der Transportkette (12) ausgebildet ist, dadurch gekennzeichnet, dass die erste Führungsschiene (24) und die zweite Führungsschiene (26) lösbar an dem Träger (22) angeordnet sind.

## Beschreibung

Die vorliegende Erfindung bezieht sich auf eine Vorrichtung zum Transportieren von Stückgütern bzw. Objekten. Die Erfindung wird unter Bezugnahme auf einen Kastenwascher beschrieben, der zum Reinigen von Getränkekisten oder allgemein Lebensmittelkisten dient. Für diese Anwendung ist die Erfindung besonders geeignet, da die Transporteinrichtung auch insbesondere in feuchten Umgebungen einsetzbar ist.

Es wird jedoch darauf hingewiesen, dass die Erfindung auch bei in anderen Vorrichtungen verwendet werden kann bei denen Objekte mittels Förderern, welche eine Transportkette aufweisen, transportiert werden. So kann die Erfindung angewandt werden auf Fördereinrichtungen die zum Fördern von Getränkekisten, Gebinden, Behältnissen, Fässern, Kegs oder dergleichen dienen.

Derartige Vorrichtungen weisen oftmals eine Transportkette auf, welche von einer Führung aus Kunststoff geführt wird. Diese Führung ist wiederum mit einer Vielzahl von Schrauben an einem Träger verschraubt.

Bei der Führungseinrichtung handelt es sich um ein Verschleißteil, welches regelmäßig ausgewechselt werden muss. Zu diesem Zweck wird das Verschleißteil von seinem Träger abgeschraubt, wofür eine hohe Anzahl von Schrauben zu lösen ist. Anschließend wird eine neue Führungseinrichtung angeordnet. Zu diesem Zweck müssen wieder die einzelnen Kunststoffschienen mit dem Träger der Transporteinrichtung verschraubt werden, was zeitlich aufwändig ist. In dieser Zeit kann eine entsprechende Maschine, wie etwa ein Kastenwascher nicht genutzt werden. Oftmals führt dies sogar zum Stillstand einer gesamten Abfülllinie.

Die vorliegenden Erfindung liegt daher die Aufgabe zugrunde, derartige Wechselzeiten zu verkürzen und den Wechsel dieser Führungseinrichtungen einfacher zu gestalten. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Transporteinrichtung zum Transportieren von Stückgütern, insbesondere Gebinden oder Getränkekästen weist einen Grundträger auf, an dem (wenigstens) eine umlaufende Transportkette angeordnet ist, wobei an der Transportkette eine Vielzahl von Kontakteinrichtungen zum Kontaktieren und Transportieren der Stückgüter angeordnet ist und eine Führungseinrichtung zum Führen der Transportkette vorgesehen ist, wobei die Führungseinrichtung einen Träger aufweist, welcher an dem Grundträger befestigbar ist sowie eine erste Führungsschiene und eine zweite Führungsschiene wobei zwischen der ersten Führungsschiene und der zweiten eine Führungsausnehmung zum Führen der Transportkette ausgebildet ist.

Erfindungsgemäß sind die erste Führungsschiene und die zweite Führungsschiene lösbar an dem Träger angeordnet. Bevorzugt ist daher die Führungseinrichtung mehrteilig ausgebildet.

Es wird daher eine Modifikation der Führungseinrichtung vorgeschlagen. Diese setzt sich einerseits aus dem Träger zusammen und andererseits aus den an dem Träger angeordneten Führungsschienen. Dies erleichtert insgesamt die Montage und Demontage der Führungseinrichtung erheblich und diese kann in wesentlich kürzerer Zeit montiert und demontiert werden.

Zur Demontage müssen nur wenige Schrauben gelöst werden, um die Führungseinrichtung von dem Träger zu entfernen. Anschließend kann in kurzer Zeit eine weitere Führungseinrichtung mit intakten Führungsschienen an dem Träger befestigt werden. Der Benutzer kann dann die abgenutzten Führungsschienen von dem entnommenen Träger ersetzen, während jedoch die Maschine mit der ausgewechselten Führungseinrichtung weiter betrieben werden kann.

Daneben können auch Verschleißteile eingespart werden. Im Stand der Technik musste die gesamte Führungseinrichtung ersetzt werden, wohingegen es durch die Erfindung ausreicht, lediglich die Führungsschienen zu ersetzen.

Bei einer weiteren vorteilhaften Ausführungsform weist die Ausnehmung zum Aufnehmen der Transportkette entlang der Führungsschienen eine einheitliche Breite auf. Bevorzugt ist diese Breite größer als 1cm, bevorzugt größer als 1,5cm und bevorzugt größer als 2cm. Bei einer weiteren bevorzugten Ausführungsform ist diese Breite kleiner als 20cm, bevorzugt kleiner als 15cm, bevorzugt kleiner als 12cm, bevorzugt kleiner als 10cm, bevorzugt kleiner als 8cm und bevorzugt kleiner als 6cm und besonders bevorzugt kleiner als 5cm und besonders bevorzugt kleiner als 4cm.

Bei einer bevorzugten Ausführungsform ist wenigstens eine Führungsschiene und sind bevorzugt die Führungsschienen derart an dem Träger angeordnet, dass zwischen dem Träger und der Führungsschiene ein Spalt ausgebildet wird, der sich in der Transportrichtung sowie einer Richtung, die senkrecht zu der Richtung der Ausnehmung steht erstreckt. In diesem Führungsspalt wird die Kette bzw. ein Führungselement der Kette geführt, derart dass Kette an dem Führungseinrichtung gehalten wird.

Bevorzugt wird dieser Spalt in einer Ebene ausgebildet, welche parallel zu der Ebene ist, in welche der Träger verläuft. Bei einer bevorzugten Ausführungsform weist der Spalt eine Dicke auf, welche größer ist als 2mm, bevorzugt größer als 4mm, bevorzugt größer als 6mm. Bei einer weiteren bevorzugten Ausführungsform weist der Spalt eine Dicke auf, welche geringer ist als 3cm, bevorzugt geringer als 2,5cm, bevorzugt geringer als 2cm, bevorzugt geringer als 1,5cm und bevorzugt geringer als 1 cm.

Bei einer weiteren bevorzugten Ausführungsform ist ein Transportpfad, entlang dessen die Transportkette und bevorzugt auch die Objekte transportiert werden gekrümmt und insbesondere kreisförmig gekrümmt.

Bevorzugt ist die Transporteinrichtung dazu geeignet die Objekte zu Transportieren und insbesondere sie dabei auch zu wenden. Bevorzugt werden dabei die Objekte um einen Winkel von im Wesentlichen 180° gewendet.

Bei einer weiteren bevorzugten Ausführungsform weist die Transportkette seitliche Führungsplatten auf, um an der Führungsschiene gehalten zu werden. Bevorzugt sind dabei diese Führungsplatten in den oben genannten Spalten geführt.

Bei einer weiteren bevorzugten Ausführungsform ist die Führungseinrichtung in ihrer Gesamtheit von dem Träger entnehmbar. Dabei ist es, wie oben erwähnt möglich, dass nur wenige Schrauben oder allgemein Befestigungsmittel gelöst werden und anschließend die Führungseinrichtung von dem Träger entfernt wird.

Bevorzugt sind an dem Träger keine seitlichen Führungen zur seitlichen Führung der Führungseinrichtung vorgesehen. Im Stand der Technik wurden die Führungseinrichtungen in eine seitliche Führung des Trägers eingepasst. Auch dies führte oft zu erheblichen Verzögerungen bei der Montage und Demontage. Die Anmelderin hat jedoch festgestellt, dass auf diese seitlichen Führungen zum Halten und/oder Führen der Führungsschienen wenigstens abschnittsweise und bevorzugt vollständig verzichtet werden kann, wodurch sich die Montage und Demontage erheblich vereinfacht.

Auch wäre es möglich, dass anstelle einer durchgehenden Führung nur einzelne Führungsabschnitte vorgesehen sind.

Bei einer weiteren vorteilhaften Ausführungsform ist die erste Führungsschiene (insbesondere segmentiert) aus einer Vielzahl von ersten Führungsschienenabschnitten aufgebaut.

Bei einer weiteren bevorzugten Ausführungsform ist die zweite Führungsschiene (insbesondere segmentiert) aus einer Vielzahl von zweiten Führungsschienenabschnitten aufgebaut ist.

Bevorzugt bilden die beiden Führungsschienen wenigstens eine Führungsfläche aus, an der die Transportkette geführt wird. Bevorzugt bilden die Führungsschienen jeweils zwei Führungsflächen aus, an denen die Transportkette geführt wird. Besonders bevorzugt sind diese Führungsflächen senkrecht zueinander.

Bei einer weiteren bevorzugte Ausführungsform weisen die Führungsabschnitte unterschiedliche Längen auf, derart, dass ein Übergang von einem ersten Führungsabschnitt zu einem zweiten Führungsabschnitt der ersten Führungsschiene in der Transportrichtung der Transportkette gegenüber einem Übergang von einem ersten Führungsabschnitt zu einem zweiten Führungsabschnitt der zweiten Führungsschiene versetzt ist.

Auf diese Weise wird erreicht, dass die Stöße der ersten Führungsschiene gegenüber den Stößen der zweiten Führungsschiene in der Transportrichtung der Transportkette versetzt sind. Auf diese Weise kann der Verschleiß beim Betrieb der Führungseinrichtung reduziert werden.

Bei einer weiteren bevorzugten Ausführungsform weist der Träger eine erste Trägerplatte auf, welche sich wenigstens abschnittsweise in der Transportrichtung der Transportkette erstreckt und eine zweite Trägerplatte, welche sich wenigstens abschnittsweise in der Transportrichtung erstreckt, wobei die zweite Trägerplatte wenigstens abschnittsweise an der ersten Trägerplatte anliegt. Bevorzugt liegt die zweite Trägerplatte wenigstens abschnittsweise und bevorzugt vollständig vollflächig an der ersten Trägerplatte an.

Bei einer weiteren bevorzugten Ausführungsform erstrecken sich beide Trägerplatten im Wesentlichen entlang des vollständigen Transportpfades der Stückgüter bzw. der zu transportierenden Produkte.

Bei einer weiteren bevorzugten Ausführungsform sind die erste Trägerplatte und die zweite Trägerplatte aneinander befestigt.

Bei einer weiteren bevorzugten Ausführungsform weist die erste Trägerplatte eine größere Breite auf als die zweite Trägerplatte. Besonders bevorzugt ist die Breite der ersten Trägerplatte wenigstens 10% größer als die Breite der zweiten Trägerplatte, bevorzugt wenigstens 20% größer, bevorzugt wenigstens 30% größer. Bei einer weiteren bevorzugten Ausführungsform ist die Breite der ersten Trägerplatte höchstens 100% größer als die Breite der zweiten Trägerplatte, bevorzugt höchstens 80% größer, bevorzugt höchstens 60% größer und bevorzugt 50% größer.

Die Breite ist dabei bevorzugt senkrecht zu der Transportrichtung der Produkte definiert.

Bei einer weiteren bevorzugten Ausführungsform ragt die erste Trägerplatte wenigstens einseitig und bevorzugt beidseitig über die zweite Trägerplatte hinaus.

Bei einer weiteren bevorzugten Ausführungsform ist an der ersten Trägerplatte wenigstens eine Führungsschiene angeordnet und sind bevorzugt an der ersten Trägerplatte beide Führungsschienen angeordnet.

Bei einer weiteren bevorzugten Ausführungsform bildet die zweite Trägerplatte einen Nutgrund der Ausnehmung, in welcher die Transportkette geführt wird, aus.

Bei einer weiteren bevorzugten Ausführungsform weist die Vorrichtung eine erste Umlenkeinrichtung zum Umlenken der Transportkette und eine zweite Umlenkeinrichtung zum Umlenken der Transportkette auf und die Transportkette verläuft bevorzugt zwischen der ersten Umlenkeinrichtung und der zweiten Umlenkeinrichtung wenigstens abschnittsweise gekrümmt verläuft.

Bevorzugt verläuft diese Krümmung dabei wenigstens abschnittsweise kreisförmig. Bei einer bevorzugten Ausführungsform weist die Transportkette eine Vielzahl von Kettengliedern auf, die jeweils miteinander gelenkig bezüglich einer Vielzahl von Gelenkachsen verbunden sind.

Bevorzugt verläuft die Krümmung der Transportkette derart gekrümmt, dass die einzelnen Gelenkachsen nicht zueinander parallel sind. Bevorzugt ist durch diese Krümmung jede Gelenkachse gegenüber einer benachbarten Gelenkachse um eine (geringen) Winkel verschwenkt.

Bevorzugt erfolgt die Umlenkung der Transportkette an der ersten Umlenkeinrichtung und an der zweiten Umlenkeinrichtung um wenigstens 90°, bevorzugt um wenigstens 120°, bevorzugt um wenigstens 150° und bevorzugt um 180°.

Besonders bevorzugt erfolgt Umlenkung mittels eines Zahnrades.

Bei einer weiteren bevorzugten Ausführungsform sind die erste Trägerplatte und/oder die zweite Trägerplatte segmentiert ausgebildet sind. Bevorzugt sind also die erste Trägerplatte und/oder die zweite Trägerplatte aus einer Vielzahl von Segmenten zusammengesetzt die bevorzugt miteinander -insbesondere kraftschlüssig und/oder formschlüssig- verbunden sind.

Bei einer bevorzugten Ausführungsform weist ein Segment der ersten Trägerplatte ein Schwalbenschwanzprofil auf, mit welchem dieses Segment mit einem zweiten Segment der Trägerplatte verbunden werden kann.

Bevorzugt sind die Segmente der ersten Trägerplatte gekrümmt ausgebildet.

Bei einer weiteren bevorzugten Ausführungsform ist der Träger aus einem Metall gefertigt. Dabei ist es möglich, dass sowohl die erste Trägerplatte als auch die zweite Trägerplatte aus einem Metall gefertigt ist. Besonders bevorzugt handelt es sich bei dem Metall um Aluminium oder Edelstahl. Insbesondere handelt es sich um ein rostfreies Material. Bevorzugt sind die erste Trägerplatte und die zweite Trägerplatte lösbar aneinander angeordnet.

Bei einer weiteren bevorzugten Ausführungsform sind die Führungsschienen aus einem Kunststoff gefertigt sind. Bevorzugt ist dabei der Kunststoff aus einer Gruppe von Kunststoffen ausgewählt welche PEEK, POM, HDPE, PTG-CF, direktdruckfähigen Kunststoffen und dergleichen enthält.

Bei einer weiteren bevorzugten Ausführungsform weist der Träger Rastmittel auf, an welchen die Führungsschienenabschnitte angeordnet werden können. Bevorzugt sind dabei diese Rastmittel in unterschiedlicher Weise ausgebildet, insbesondere derart, dass an jedem dieser Rastmittel nur genau ein Führungsschienenabschnitt angeordnet und insbesondere befestigt werden kann.

Bevorzugt sind die Führungsschienenabschnitte an dem Träger lösbar befestigt, insbesondere mit Befestigungsmitteln wie Schrauben.

Bevorzugt sind dabei diese Rastmittel derart ausgebildet, dass bestimmte Segmente der Führungsschienen nur in eindeutiger Weise an dem Träger befestigt werden können. Auf diese Weise kann die Befestigung der der Führungsschienen bzw. deren Segmente nur in eindeutiger Weise erfolgen. Dabei können bevorzugt die Führungsschienensegmente nur in einer eindeutigen Weise an dem Träger befestigt werden.

Bei einer weiteren bevorzugten Ausführungsform können die Führungsschienen an dem Träger lösbar befestigt und insbesondere angeschraubt sein.

Bei einer weiteren bevorzugten Ausführungsform weisen die Kontakteinrichtungen jeweils einen Grundkörper aufweisen, an dem eine Vielzahl von flexiblen Kontaktstegen angeordnet ist, welche dazu geeignet und bestimmt sind, die zu fördernden Stückgüter zu kontaktieren.

Bei einer weiteren bevorzugten Ausführungsform weist die Transporteinrichtung eine zweite Transportkette auf, wobei an dieser zweiten Transportkette eine Vielzahl von zweiten Kontakteinrichtungen zum Kontaktieren und Transportieren der Stückgüter angeordnet ist sowie eine Führungseinrichtung zum Führen der Transportkette, wobei die Stückgüter zwischen den ersten Kontakteinrichtungen und den zweiten Kontakteinrichtungen förderbar sind.

Bevorzugt werden die Stückgüter zwischen den ersten Kontakteinrichtungen und den zweiten Kontakteinrichtungen eingeklemmt und/oder eingespannt, um so transportiert zu werden.

Die vorliegende Erfindung ist weiterhin auf eine Vorrichtung zum Reinigen von Getränkekästen mit einer Transporteinrichtung der oben beschriebenen Art gerichtet, welche wenigstens eine Beaufschlagungseinrichtung aufweist, welche die Getränkekästen während ihres Transports mit einem flüssigen Reinigungsmittel beaufschlagt. Bei dieser Beaufschlagungseinrichtung kann es sich beispielsweise um eine Düse handeln, welche die Getränkekästen mit dem Reinigungsmedium beaufschlagt.

Bevorzugt handelt es sich bei der Transportrichtung um einen Klemmbackenförderer, wobei bevorzugt die Getränkekästen zwischen zwei an zwei unterschiedlichen Führungseinrichtungen angeordneten Kontaktiereinrichtungen, welche bevorzugt als Klemmbacken ausgeführt sind, transportiert werden.

Bei einer bevorzugten Ausführungsform weist die Vorrichtung ein Wasserbad auf, innerhalb dessen die Getränkekästen transportiert werden. Bevorzugt weist die Vorrichtung Strömungserzeugungseinrichtung auf, welche in diesem Wasserbad eine Strömung erzeugt.

Bei einer bevorzugten Ausführungsform verläuft die Führungseinrichtung wenigstens abschnittsweise innerhalb des Wasserbades.

Die vorliegende Erfindung ist weiterhin auf eine Führungseinrichtung zum Führen einer Transportkette gerichtet, wobei die Führungseinrichtung einen Träger aufweist, welcher (insbesondere mit Befestigungsmittel wie Schrauben, Nieten und/oder Bolzen) an einem Grundträger befestigbar ist sowie eine erste Führungsschiene und eine zweite Führungsschiene wobei zwischen der ersten Führungsschiene und der zweiten Führungsschiene eine Führungsausnehmung zum Führen der Transportkette ausgebildet ist.

Erfindungsgemäß sind die erste Führungsschiene und die zweite Führungsschiene lösbar an dem Träger angeordnet und wenigstens eine Führungsschiene ist segmentiert aus einer Vielzahl von Führungsschienenabschnitten aufgebaut.

Bevorzugt sind beide Führungsschienen segmentiert aus einer Vielzahl von Führungsschienenabschnitten aufgebaut.

Bevorzugt ist der Träger aus wenigstens einer ersten Trägerplatte und einer zweiten Trägerplatte gebildet und bevorzugt aus einer Vielzahl von ersten Trägerplattensegmenten und/oder einer Vielzahl von zweiten Trägerplattensegmenten.

Bevorzugt sind die erste Trägerplatte und die zweite Trägerplatte flächig aneinander angeordnet.

Bei einer bevorzugten Ausführungsform sind die Führungsschienen aus einem Kunststoff gefertigt. Bevorzugt verläuft wenigstens ein Teil der Führungsschienenabschnitte gekrümmt und bevorzugt kreisförmige gekrümmt. Bevorzugt ist wenigstens ein Teil der Führungsschienenabschnitte geradlinig ausgebildet. Insbesondere handelt es sich hierbei um diejenigen Führungsschienenabschnitte, welche die Endabschnitte der Führungsschienen ausbilden.

Bei einer weiteren bevorzugten Ausführungsform weist wenigstens eine Führungsschiene ein gekrümmtes und insbesondere ein kreisförmig gekrümmtes Profil auf.

Weitere Vorteile und Ausführungsformen ergeben sich aus den beigefügten Figuren:

Darin zeigen:
- Fig. 1: eine teilweise Darstellung einer Vorrichtung zum Reinigen von Getränkekästen;
- Fig. 2: eine Transporteinrichtung nach dem Stand der Technik;
- Fig. 3: eine Detailansicht einer Transporteinrichtung nach dem Stand der Technik;
- Fig. 4: eine Darstellung einer erfindungsgemäßen Transporteinrichtung;
- Fig. 5: eine weitere Darstellung einer erfindungsgemäßen Transporteinrichtung;
- Fig. 6: eine erfindungsgemäße Führungseinrichtung in einem demontierten Zustand;
- Fig. 7: die Führungseinrichtung aus Fig. 6 in einem montierten Zustand;
- Fig. 8: eine weitere Darstellung einer erfindungsgemäßen Führungseinrichtung;
- Fig. 9: eine Detailansicht der in Fig. 8 gezeigten Führungseinrichtung; und
- Fig. 10: eine Darstellung zum Transport eines Stückguts.

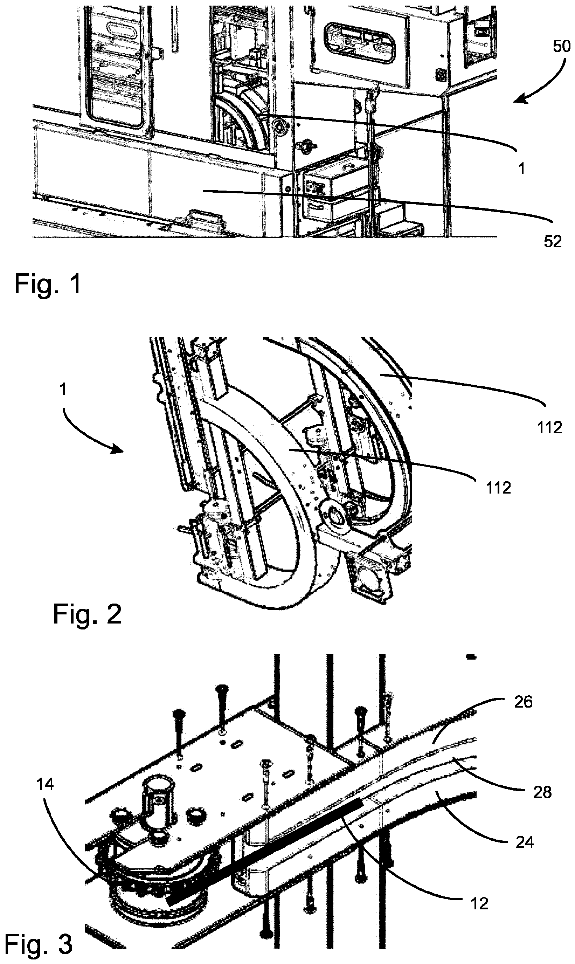

Fig. 1 zeigt eine teilweise Darstellung einer Vorrichtung 50 zum Reinigen von Getränkekästen. Diese weist ein Gehäuse 52 auf sowie eine Transporteinrichtung 1 zum Transportieren der (nicht gezeigten) Behältniskästen bzw. Getränkekästen. Hierbei handelt es sich bei der Transporteinrichtung 1 um meine Aufwärtsfördereinrichtung, welche die Getränkekästen transportiert und dabei im 180° gewendet. Bevorzugt transportiert die Transporteinrichtung die Getränkekästen entlang eines Transportpfades, der vorteilhaft kreisförmig und vorteilhaft in einer vertikalen Ebene verläuft.

Fig. 2 zeigt eine Transporteinrichtung 1 nach dem Stand der Technik. Diese weist hier zwei Führungseinrichtungen 112 auf, an denen jeweils Transportketten angeordnet sind und nicht gezeigte Kontaktiereinrichtungen zum Kontaktieren der Stückgüter. Die (nicht gezeigten) Getränkekästen werden zwischen den beiden Führungseinrichtungen 112 transportiert.

Fig. 3 zeigt einen Umlenkbereich, in dem eine nur schematisch dargestellte Transportkette 12 (hier um 180°) umgelenkt wird. Dabei ist ein Zahnrad 14 vorgesehen, welches in die Transportkette eingreift und diese so transportiert. Die Führungseinrichtung 4 weist hier eine erste Führungsschiene 24 und eine zweite Führungsschiene 26 auf sowie eine Ausnehmung 28, die zwischen den beiden Führungsschienen 24, 26 gebildet wird. In dieser Ausnehmung 28 wird die Transportkette 12 geführt. An der Transportkette ist wiederum eine Vielzahl von Kontakteinrichtungen (nicht gezeit) zum Kontaktieren der Getränkebehältnisse angeordnet. Bevorzugt sind diese Kontakteinrichtung als Klemmbacken ausgeführt, wobei bevorzugt die (nicht gezeigten) Getränkekästen zwischen zwei Klemmbacken (zweier Führungseinrichtungen eingeklemmt werden (und in diesem eingeklemmten Zustand transportiert werden).

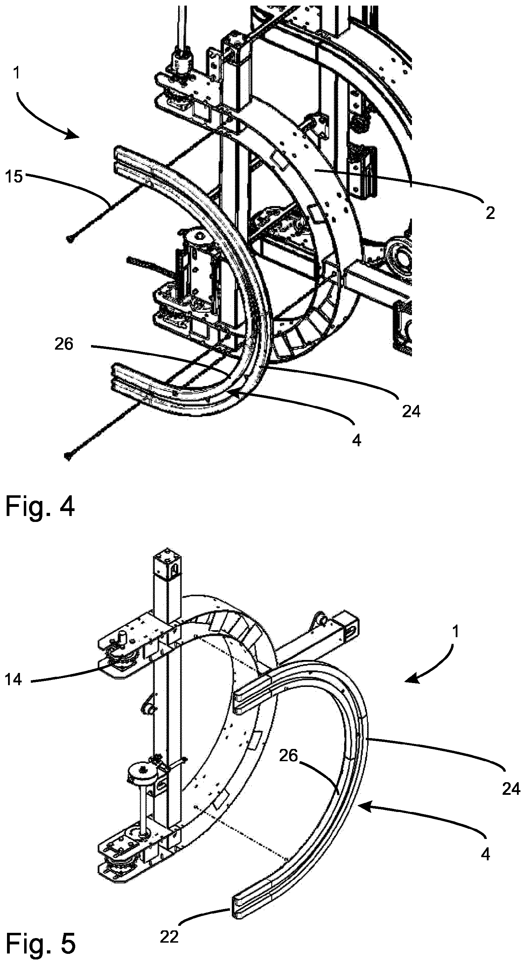

Fig. 4 zeigt eine Darstellung einer erfindungsgemäßen Transporteinrichtung 1 zum Transportieren von Stückgütern (und insbesondere Getränkekästen). Dabei ist ein Grundträger 2 vorgesehen, an dem eine Führungseinrichtung 4 angeordnet ist. Dabei sind Befestigungsmittel wie etwa Schrauben 15 vorgesehen, mit denen die Führungseinrichtung 4 an dem Grundträger 2 angeschraubt werden kann. Bevorzugt erstreckt sich eine Längsrichtung dieser Befestigungsmittel senkrecht zu einer Ebene, in welcher die Transportkette (nicht gezeigt) verläuft und/oder senkrecht zu dem Transportpfad der (nicht gezeigten) Stückgüter.

Die Führungseinrichtung 4 weist eine erste Führungsschiene 24 in eine zweite Führungsschienen 26 auf. Zwischen diesen Führungsschienen 24, 26 ist eine Ausnehmung gebildet, in welcher die (nicht gezeigte) Transportkette verläuft.

Fig. 5 zeigt eine weitere Darstellung der Transporteinrichtung 1. Auch hier ist die Führungseinrichtung 4 nicht an dem Träger 2 montiert. Allerdings kann sie relativ einfach mit wenigen Schrauben, wie durch die gestrichelten Linien (welche sich in der Längsrichtung dieser Schrauben erstrecken) gezeigt, an dem Grundträger 2 montiert werden. Erkennbar sind auch hier wieder die beiden Führungsschienen 24 und 26, welche hier einen in etwa kreisförmigen Verlauf aufweisen. Daneben ist auch ein Träger 22 vorgesehen, an dem die Führungsschienen angeordnet sind.

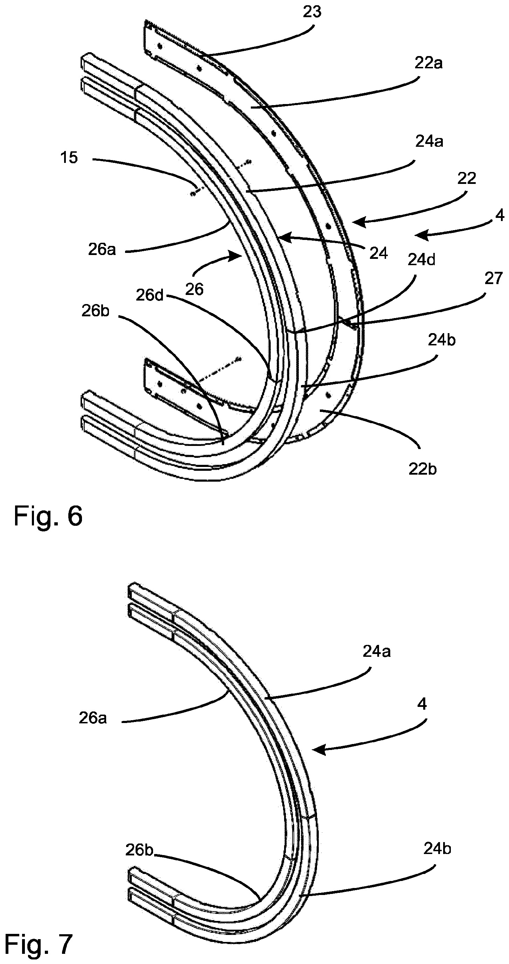

Fig. 6 zeigt eine Führungseinrichtung 4 in einem (von dem Träger) demontierten Zustand. Dabei ist der in seiner Gesamtheit mit 22 bezeichnete Träger vorgesehen. Dieser weist hier ein erstes Trägersegment 22a und ein zweites Trägersegment 22b auf, die miteinander, beispielsweise über eine Schwalbenschwanzverbindung 27 verbunden sind. An dem Träger 22 sind weiterhin Verbindungselemente 23 vorgesehen, an denen die Führungsschienen 24 und 26 angeordnet werden können. Bevorzugt sind diese Verbindungselemente derart gestaltet, dass an jedem dieser Verbindungselement nur genau ein Führungsschienenabschnitt befestigt werden kann. Auf diese Weise können fehlerhafte Montagen verhindert werden.

Man erkennt, dass sich die Führungsschiene 24 aus mehreren Führungsabschnitten 24a und 24b zusammensetzt. Diese Abschnitte sind dabei jeweils gekrümmt. Daneben sind hier bevorzugt noch zwei weitere, bevorzugt geradlinige Führungsabschnitte in Form von Endabschnitten vorgesehen.

Auch die Führungsschiene 26 setzt sich aus mehreren Führungsabschnitten 26a und 26b (und bevorzugt zwei bevorzugt ebenfalls geradlinig verlaufenden Endabschnitten zusammen.

Man erkennt weiterhin, dass die Übergänge 24d und 26d zwischen jeweils zwei Führungsabschnitten in der Transportrichtung der Stückgüter, d.h. auch in der Erstreckungsrichtung der Führungsschienen 24 und 26 bezüglich einander versetzt sind.

Fig. 7 zeigt eine weitere Darstellung der Führungseinrichtung 4. Auch hier sind wieder die Führungsabschnitte 24a und 24b sowie 26a und 26b zu erkennen, wobei deren Längen unterschiedlich ist und damit die Übergänge wie oben erwähnt versetzt sind.

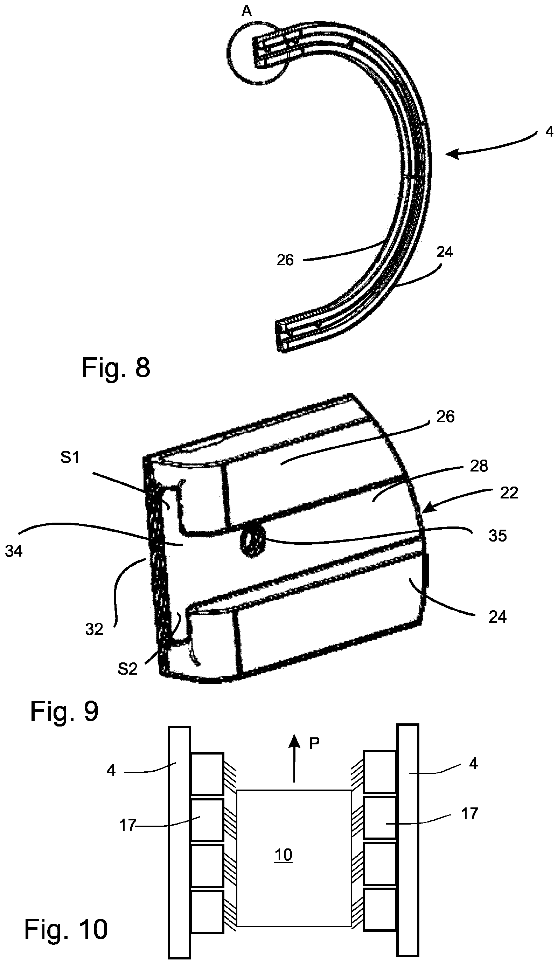

Fig. 8 zeigt eine weitere Darstellung einer Führungsschiene 4 und das Bezugszeichen A kennzeichnet ein Endabschnitt, der in Fig. 9 vergrößert dargestellt ist. In Fig. 9 erkennt man entsprechend die beiden Führungsschienen 24 und 26 sowie auch den Grundträger 22. Dieser ist hier aus zwei Trägerplatten 32 und 34 zusammengesetzt, die (bevorzugt flächig) aneinander liegen. Das Bezugszeichen 35 kennzeichnet ein Befestigungsmittel wie eine Bohrung, um die Führungseinrichtung an einem (nicht gezeigten) Träger anzuordnen.

Man erkennt weiterhin die Ausnehmung 28, innerhalb derer die (nicht gezeigte) Kette geführt wird. Dabei werden (nicht gezeigte) Grundplatten der Kette in zwei Spalten S1 und S2 geführt. Auf diese Weise wird verhindert, dass sich die Kette von der Führungseinrichtung lösen kann.

Fig. 10 zeigt eine Darstellung zur Veranschaulichung des Transports eines Stückguts, hier eines Getränkekastens. Dieser wird zwischen zwei Führungseinrichtungen 4 transportiert. Beide Führungseinrichtungen weisen eine Vielzahl von Kontakteinrichtungen 17 auf, die jeweils an (nicht gezeigten) Transportketten angeordnet sind. Der Getränkekasten wird zwischen zwei einander gegenüberliegenden Kontakteinrichtungen eingeklemmt und kann auf diese Weise entlang eines Transportpfads P transportiert werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Transporteinrichtung (1) zum Transportieren von Stückgütern (10), insbesondere Gebinden oder Getränkekästen mit einem Grundträger (2), an dem eine umlaufende Transportkette (12) angeordnet ist, wobei an der Transportkette (12) eine Vielzahl von Kontakteinrichtungen zum Kontaktieren und Transportieren der Stückgüter (10) angeordnet ist und mit einer Führungseinrichtung (4) zum Führen der Transportkette (10), wobei die Führungseinrichtung einen Träger (22) aufweist, welcher an dem Grundträger (2) befestigbar ist sowie eine erste Führungsschiene (24) und eine zweite Führungsschiene (26), wobei zwischen der ersten Führungsschiene (24) und der zweiten (26) eine Führungsausnehmung (28) zum Führen der Transportkette (12) ausgebildet ist,
**dadurch gekennzeichnet, dass**
die erste Führungsschiene (24) und die zweite Führungsschiene (26) lösbar an dem Träger (22) angeordnet sind.

2. Transporteinrichtung (1) nach Anspruch 1,
**dadurch gekennzeichnet, dass**
die erste Führungsschiene (24) segmentiert aus einer Vielzahl von ersten Führungsschienenabschnitten (24a, 24b, 24c) aufgebaut ist und/oder die zweite Führungsschiene (26) segmentiert aus einer Vielzahl von zweiten Führungsschienenabschnitten (26a, 26b, 26c) aufgebaut ist.

3. Transporteinrichtung (1) nach dem vorangegangenen Anspruch,
**dadurch gekennzeichnet, dass**
die Führungsabschnitte unterschiedliche Längen aufweisen, derart, dass ein Übergang von einem ersten Führungsabschnitt (24a) zu einem zweiten Führungsabschnitt (24b) der ersten Führungsschiene (24) in der Transportrichtung der Transportkette gegenüber einem Übergang von einem ersten Führungsabschnitt (26a) zu einem zweiten Führungsabschnitt (26b) der zweiten Führungsschiene (26) versetzt ist.

4. Transporteinrichtung (1) nach wenigstens einem der vorangegangenen Ansprüche,
**dadurch gekennzeichnet, dass**
der Träger (22) eine erste Trägerplatte (32) aufweist, welche sich wenigstens abschnittsweise in der Transportrichtung der Transportkette erstreckt und eine zweite Trägerplatte (34), welche sich wenigstens abschnittsweise in der Transportrichtung erstreckt, wobei die zweite Trägerplatte (36) wenigstens abschnittsweise an der ersten Trägerplatte (34) anliegt.

5. Transporteinrichtung nach dem vorangegangenen Anspruch,
**dadurch gekennzeichnet, dass**
die erste Trägerplatte (34) eine größere Breite aufweist als die zweite Trägerplatte (36).

6. Transporteinrichtung (1) nach wenigstens einem der vorangegangenen Ansprüche,
**dadurch gekennzeichnet, dass**
die Vorrichtung eine erste Umlenkeinrichtung (14) zum Umlenken der Transportkette (12) und eine zweite Umlenkeinrichtung zum Umlenken der Transportkette (12) aufweist und die Transportkette bevorzugt zwischen der ersten Umlenkeinrichtung (14) und der zweiten Umlenkeinrichtung (16) wenigstens abschnittsweise gekrümmt verläuft.

7. Transporteinrichtung (1) nach wenigstens einem der vorangegangenen Ansprüche,
**dadurch gekennzeichnet, dass**
die erste Trägerplatte (34) und/oder die zweite Trägerplatte (36) segmentiert ausgebildet sind.

8. Transporteinrichtung (1) nach wenigstens einem der vorangegangenen Ansprüche,
**dadurch gekennzeichnet, dass**
der Träger (22) aus einem Metall gefertigt ist und/oder die Führungsschienen aus einem Kunststoff gefertigt sind.

9. Transporteinrichtung (1) nach wenigstens einem der vorangegangenen Ansprüche,
**dadurch gekennzeichnet, dass**
die Kontakteinrichtungen jeweils einen Grundkörper aufweisen, an dem eine Vielzahl von flexiblen Kontaktstegen angeordnet ist, welche dazu geeignet und bestimmt sind, die zu fördernden Stückgüter zu kontaktieren.

10. Transporteinrichtung (1) nach wenigstens einem der vorangegangenen Ansprüche,
**dadurch gekennzeichnet, dass**
die Transporteinrichtung eine zweite Transportkette aufweist, wobei an der Transportkette (12) eine Vielzahl von zweiten Kontakteinrichtungen zum Kontaktieren und Transportieren der Stückgüter (10) angeordnet ist und mit einer Führungseinrichtung (4) zum Führen der Transportkette (10), wobei die Stückgüter zwischen den ersten Kontakteinrichtungen und den zweiten Kontakteinrichtungen förderbar sind.

11. Vorrichtung zum Reinigen von Getränkekästen mit einer Transporteinrichtung nach wenigstens einem der vorangegangenen Ansprüche und mit wenigstens einer Beaufschlagungseinrichtung, welche die Getränkekästen während ihres Transports mit einem flüssigen Reinigungsmittel beaufschlagt.

12. Führungseinrichtung (4) zum Führen einer Transportkette (12), wobei die Führungseinrichtung einen Träger (22) aufweist, welcher an einem Grundträger (2) befestigbar ist sowie eine erste Führungsschiene (24) und eine zweite Führungsschiene (26) wobei zwischen der ersten Führungsschiene (24) und der zweiten Führungsschiene (26) eine Führungsausnehmung (28) zum Führen der Transportkette (12) ausgebildet ist,
**dadurch gekennzeichnet, dass**
die erste Führungsschiene (24) und die zweite Führungsschiene (26) lösbar an dem Träger (22) angeordnet sind und wenigstens eine Führungsschiene segmentiert aus einer Vielzahl von Führungsschienenabschnitten (24a, 24b) aufgebaut ist.

13. Führungseinrichtung (4) nach dem vorangegangenen Anspruch,
**dadurch gekennzeichnet, dass**
wenigstens eine Führungsschiene ein gekrümmtes und insbesondere ein kreisförmig gekrümmtes Profil aufweist.
